# EUROPEAN PATENT APPLICATION

(11) **EP 0 843 120 A1**
(43) Date of publication of application: **20.05.1998**
(21) Application number: 96830578.9
(22) Date of filing: 13.11.1996
(51) Int. Cl.: F16L 33/213

(54) **Method for securing a fitting to a hose and hose assembly obtained by such a method**

(71) Applicant: MANULI RUBBER INDUSTRIES S.r.l., I-63100 Ascoli Piceno (IT)
(72) Inventor: van den Berkmortel, Michael Theodorus Maria, 4704 RG Roosendaal (NL)
(74) Representative: Modiano, Guido, Dr.-Ing.

(57) **Abstract**

A method is provided for securing a fitting to a hose which comprises the steps of: positioning a rigid shell element (4) over a hose end (2); introducing a nipple member (3) in the hose end (2); expanding the nipple member (3) for compressing the hose end outwards against the shell element (4), while preventing the shell from growing radially outwards at least at selected areas thereof; providing a fitting (5) with an outer surface thereof adapted for sealingly engaging the inner surface of the nipple member (3); and inserting the fitting (5) inside the nipple member (3). The hose assembly so obtained comprises a rigid shell element (4) positioned over a hose end (2), a nipple member (3) inserted in said hose end (2), the nipple member being expanded outwards to compress the hose end (2) against the shell element (4) which, in turn is prevented form growing outwards at least at selected areas thereof, and a fitting (5) being sealingly inserted inside said nipple member (3).

## Description

The present invention relates to a method for securing an end fitting to a hose and a hose assembly obtained by such a method.

As is known, hydraulic, pneumatic or air-conditioning systems generally use, as a connection between the main components, metallic pipelines and hose assemblies. The hose assemblies are composed of elastomeric or plastic hoses coupled to one or more metallic or rigid fittings.

Usually the hoses are composed of rubber or plastic-like materials with one or more fabric reinforcements and a rubber or plastic protective cover.

The fittings are in general made from a steel or aluminium tube.

The hose-to-fitting coupling is generally made by performing on the tube a circular groove or a projection over which the hose is slid. On the outside of the hose a shell or clamp is positioned which has to be deformed so as to compress the hose to the metal tube. Sometimes a spanner is used to compress the hose to the tube.

The portion of the metal tube that is inserted in the hose is usually called nipple.

The deformation on the shell is applied by radially forcing a tool from the outside inwards. In particular, clamps or spanners are used for forcing the shell inwards in a suitable manner.

These known assemblies and relative methods have however the drawback that the internal diameter of the fluid passage is reduced, precisely as a result of the clamping or crimping of the shell surrounding the hose onto the metal tube fitted into the bore of the hose.

The aim of the present invention is to eliminate the above described drawback by providing a method for securing an end fitting to a hose, by which no reduction of the internal diameter of the fluid passage occurs.

Another object of the invention is to provide a hose assembly, particularly of the type comprising a hose coupled to a rigid fitting, in which no reduction of the fluid passage occurs.

Still another object of the invention is to provide a hose assembly, particularly of the type comprising a hose coupled to a rigid fitting, which is simple and economical to produce with materials and devices of common use.

With these and other objects in view, there is provided, according to an aspect of the present invention, a method for securing an end fitting to a hose as specified in claim 1.

According to a further aspect of the present invention, there is provided a hose assembly as specified in claim 7.

Further characteristics and advantages of the present invention will become apparent from the following detailed description of a preferred but not exclusive embodiment thereof, illustrated only by way of non-limitative example in the accompanying drawings, wherein:
figure 1 is a plane view, partially in cross-section, of the hose assembly, according to the invention, in the assembled configuration;
figure 2 is a cross-sectional view of a hose end and of a shell member in a first step of making the hose assembly, according to the invention;
figure 3 is a cross-sectional view of the hose and shell member in a further step of making the hose assembly according to the invention, with a nipple element ready for insertion;
figure 4 is a cross-sectional view of the hose assembly according to the invention, with the nipple element inserted, in a final stage of its fabrication;
figure 5 is a cross-sectional view of the hose assembly according to the invention, with the fitting ready for coupling.

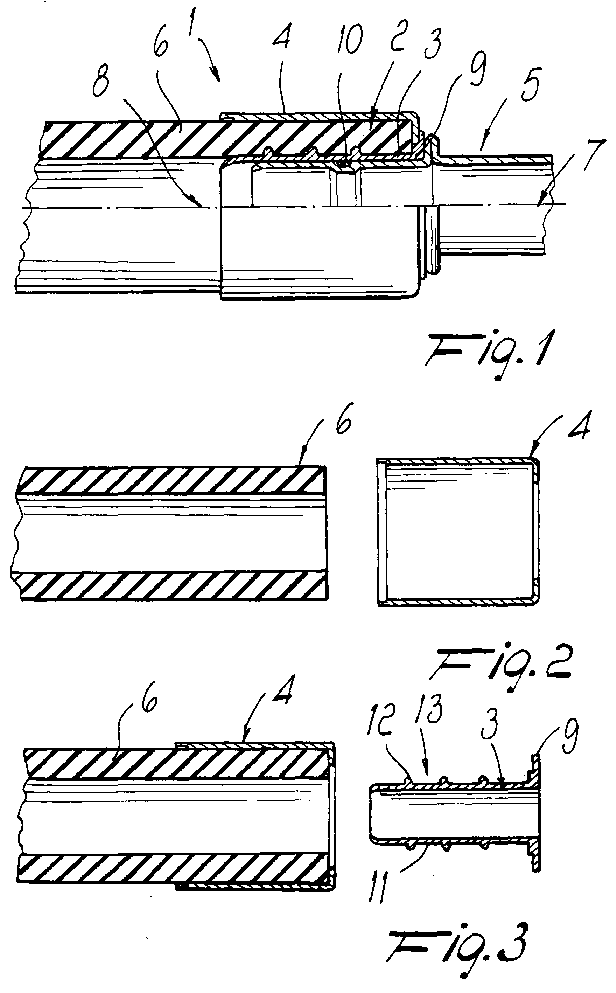

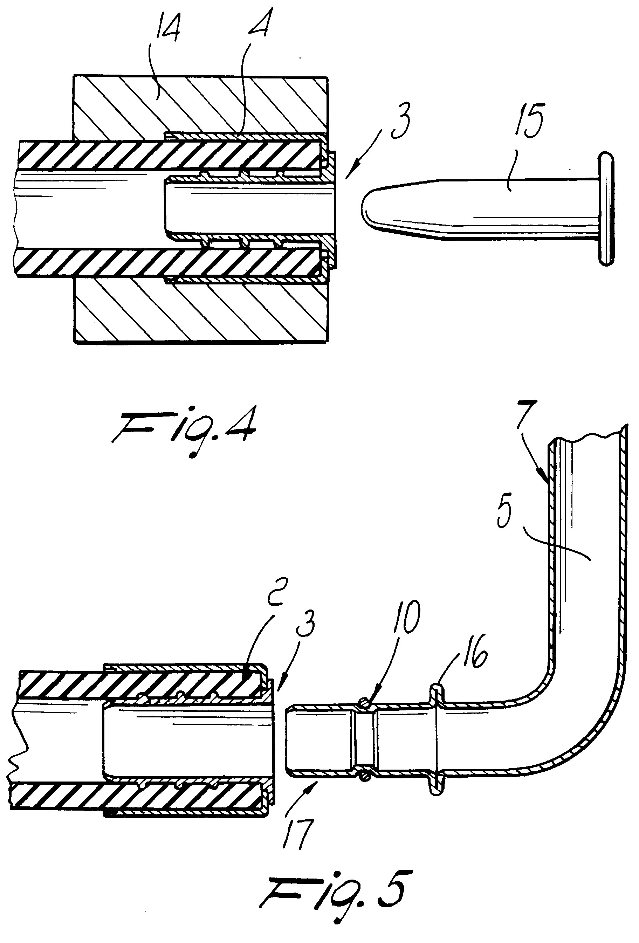

With reference to the above figures, the hose assembly according to the invention, generally designated by the reference numeral 1 is composed of a hose 6 having a hose end 2 on which a rigid shell element 4 is positioned. A nipple member 3 which is expanded so as to compress the hose end 2 against the shell element 4 is inserted in the hose end. The shell element 4 does not undergo any outward overall radial growth, but possibly only at selected areas thereof. A fitting 5 is sealingly inserted inside the nipple member 3.

According to the invention, for securing the fitting 5 to the hose 6, this latter is first prepared to a desired length. If a rubber hose is used, the compound may already be cured, but this can also be done at a further moment.

The shell element 4, which may be a socket is then placed over the end 2 of the hose 6 where the fitting 5 will be placed.

The nipple member 3, as a separate hollow nipple-insert, is further positioned in the hose 6, by first mounting in the hose end 2 the first free end 8 of the nipple 3. The hollow nipple-insert 3 is of cylindrical shape having, if necessary, a number of circular grooves 11 or raisings 12 on its outer surface.

The nipple-insert 3 may be forced inside the hose or freely introduced, depending on its outer diameter dimensions which can be smaller or larger than the inner diameter of the hose, or even equal to it. The nipple-insert 3 has at the end opposite to the free end 8, a positive stop 9 which does not allow the nipple to be completely inserted into the hose 6.

The hose can have an inner diameter comprised between 4 and 76 mm, preferably comprised between 6 and 22 mm, and in a most preferred embodiment has a diameter of 12.7 mm. Prior to its insertion into the hose 6, a bonding or sealing material 13 may be applied on the surface of the nipple-insert 3. The applied material can, if necessary, be in a not-cured, viscous or not-baked state.

The assembly hose/shell/nipple-insert 3 is placed in a fixing device 14 which will not allow the socket 4 and hose end 2 to slide, and at the same time prevents outward growth of the socket 4, at least at selected areas thereof.

An expansion means, possibly a mandrel 15, having a larger diameter than the inner diameter of the hollow nipple-insert 3 is then forced in said nipple-insert 3. The mandrel can be of the type having a tapered end, where the tapering angle is comprised between 2° and 30°, and in preferred embodiment is 12°. This will result in a radial growth of the nipple-insert 3 henceforth compressing the nipple-insert 3 to the hose end 2. The growth of the diameter will be comprised between 2% and 45%, and in the preferred embodiment is 30%. The shell, as well as the hose, will be supported during the nipple-insert 3 growth. The outside of the shell will be supported, if necessary, in the fixing device 14 which may advantageously have radial grooves allowing for the shell to grow outwards only at selected areas thereof, creating thus areas of relaxation in the hose 6.

At the opposite hose end, the nipple-insert 3 and shell element 4 are attached in the same manner to the hose 6.

If necessary the hose assembly 1 can now be heat-treated to cure the elastomer or bake the adhesives.

A fitting 5 is further prepared having a hose end portion 17 and a connection end 7. The end 17 of the fitting 5 to be introduced into the hose end 2, has a dedicated shape for the nipple-insert 3. The tube fitting may be provided bent, or having any type of connection.

The fitting end 17 is eventually forced in the nipple-insert 3 of the hose assembly 1 for sealingly engaging the hose end 2. Care has to be taken to the orientation of said fitting 5.

On the fitting end 17 to be inserted into the hose 6, at a convenient distance from its tip, a positive stop 16 may be provided to prevent the fitting 5 from intruding too far in the hose assembly. The hose end 17 of the fitting 5 shall have a suitable surface to prevent leaking of the hose assembly. On the hose end 17 of the fitting 6 a bonding material or sealing material 10 can also be applied. The applied bonding material can if necessary be in a not-cured, viscous or not-baked state.

The corresponding fitting on the other end of the hose 6 is positioned in a similar way.

If necessary, the whole hose assembly can be heat-treated to cure the elastomer or bake the adhesives.

In practice it has been observed that the hose assembly according to the present invention fully achieves the intended aim, since the combination of the hose 6, the shell element 4 rigidly enclosing the hose end 2, where the shell element 4 is adapted to resist radial growing thereof on its entire surface or at least at selected areas thereof, the nipple member 3 inserted in said hose end 2 and expanded outwards for compressing the hose 6 against the shell element 4, and the fitting 5 sealingly inserted at an end 17 thereof in said nipple member 3, provides a hose-to-fitting coupling which prevents significant fluid passage reduction, the assembly itself being particularly simple and reliable while obtainable with modest production costs and with common materials and devices.

The hose assembly thus conceived is susceptible to numerous modifications and variations, all of which are within the scope of the inventive concept; all the details may furthermore be replaced with other technically equivalent elements.

In practice, the materials employed, so long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Method for securing a fitting to a hose comprising:
- positioning a rigid shell element (4) over a hose end (2);
- introducing a nipple member (3) in said hose end (2);
- expanding said nipple member (3) for compressing said hose end outwards against said shell element (4), while preventing said shell from growing radially outwards at least at selected areas thereof;
- providing a fitting (5) with an outer surface thereof adapted for sealingly engaging the inner surface of said nipple member (3); and
- inserting said fitting (5) inside said nipple member (3).

2. Method according to claim 1, characterized in that it further comprises applying a bonding or sealing material on the outer surface of said nipple member (3) and/or on the outer surface of said fitting (5).

3. Method according to one or more of the above claims, characterized in that it further comprises a baking or curing step performed,
- on said hose (6) before the step of positioning said shell element (4); or
- on said hose (6) with, and after said bonding or sealing material (13) is applied to said nipple member (3), and said nipple member is inserted in said hose end (2); or
- on said hose (6) with, and after said bonding and sealing material (10, 13) is applied to said nipple member (3) and/or said fitting (5) and said nipple member and said fitting are inserted in said hose end (2).

4. Method according to one or more of the preceding claims, characterized in that the prevention of outward growth of said shell element (4) at at least selected areas thereof, is carried out by placing said shell element (4), enclosing said hose end (2) with said nipple member (3) thereinto, in a fixing device (14), said fixing device enclosing an inner surface thereof which is either smooth for preventing any outward growth of said shell element (4), or has radial grooves for allowing outward growth of said shell element (4) at selected areas thereof.

5. Method according to one or more of the preceding claims, characterized in that, said expansion of said nipple member (3) is carried out by forcing inside said nipple member (4) an expansion means (15).

6. Method according to claim 4, characterized in that said expansion means (15) comprises a mandrel.

7. Hose assembly, particularly of the type comprising a hose coupled to a rigid fitting, comprising a rigid shell element (4) positioned over a hose end (2) and a tube fitting (5) inserted in said hose end (2), characterized in that it further comprises a nipple member (3) inserted in said hose end (2), said nipple member being expanded outwards to compress said hose end (2) against said shell element (4) which, in turn is prevented form growing outwards at least at selected areas thereof, said fitting (5) being sealingly inserted inside said nipple member (3).

8. Hose assembly according to claim 6, characterized in that said nipple member (3) has an outer diameter which is smaller or larger than, or equal to the inner diameter of the hose end (2).

9. Hose assembly according to any of the claims 6 and 7, characterized in that said nipple member (3) comprises a stop means (9) at an end thereof for preventing said nipple member from complete insertion inside said hose end (2).

10. Hose assembly according to one or more of the claims 6-8, characterized in that said nipple member (3) comprises on its outer surface grooves (11) and/or raisings (12).

11. Hose assembly according to one or more of the claims 6-9, characterized in that it further comprises a bonding or sealing material (10, 13) applied on the outer surface of said nipple member (3) and/or the fitting end (17) to be inserted in said nipple member (3).

12. A hose (6), in combination with a shell element (4) rigidly enclosing an end (2) of the hose, said shell element (4) being adapted to resist radial growing thereof on its entire surface or at least at selected areas thereof, with a nipple member (3) inserted in said hose end (2) and expanded outwards for compressing said hose (6) against said shell element (4), and with a fitting (5) sealingly inserted at an end (17) thereof in said nipple member (3), whereby a hose-to-fitting coupling is provided.
